Europäisches Patentamt

European Patent Office

Office européen des brevets

(19)

(11) Numéro de publication : **0 101 378**
**B1**

(12) **FASCICULE DE BREVET EUROPÉEN**

(45) Date de publication du fascicule du brevet :
02.01.86

(51) Int. Cl.⁴ : **G 21 C 13/02**

(21) Numéro de dépôt : **83401635.4**

(22) Date de dépôt : **09.08.83**

(54) **Structure de supportage antisismique pour bloc massif notamment pour bloc-pile de réacteur nucléaire du type à neutrons rapides.**

(30) Priorité : **13.08.82 FR 8214086**

(43) Date de publication de la demande :
**22.02.84 Bulletin 84/08**

(45) Mention de la délivrance du brevet :
**02.01.86 Bulletin 86/01**

(84) Etats contractants désignés :
**BE DE FR IT**

(56) Documents cités :
**CH-A- 514 765**
**FR-A- 2 221 953**
**FR-A- 2 285 684**
**FR-A- 2 418 850**
**US-A- 2 055 000**
**NUCLEAR ENGINEERING INT., vol. 22, no. 262, septembre 1977, pages 45-47, D. SMITH:"Rubber mounts insulate whole reactor from 06. g earth-quakes"**

(73) Titulaire : **ELECTRICITE DE FRANCE Service National**
**2, rue Louis Murat**
**F-75008 Paris (FR)**

(72) Inventeur : **Bacher, Pierre**
**13 Avenue des Tilleuls**
**F-78350 Les Loges en Josas (FR)**
Inventeur : **Gueraud, Roger**
**136 Avenue de la Liberté**
**F-94700 Maisons Alfort (FR)**

(74) Mandataire : **Mongrédien, André et al**
**c/o BREVATOME 25, rue de Ponthieu**
**F-75008 Paris (FR)**

## Description

L'invention s'applique à la protection antisismique de blocs massifs, logés dans un puits de bâtiment et susceptibles de se déplacer par rapport à ce bâtiment en cas d'arrivée d'ondes sismiques.

Elle concerne notamment mais non exclusivement un dispositif de supportage antisismique pour bloc pile de réacteur nucléaire du type à neutrons rapides.

Les réacteurs nucléaires d'une façon générale ont besoin d'être protégés contre les effets néfastes des séismes qui peuvent engendrer des ondes plus ou moins violentes dans le sol et dont les composantes horizontales et verticales peuvent avoir, si l'on ne prend pas de précautions particulières, des effets très perturbateurs, voire catastrophiques, sur les dispositifs de supportage du bloc pile et sur ses différents composants.

La présente invention se rapporte plus particulièrement aux réacteurs nucléaires du type à neutrons rapides, tels que le réacteur français Superphénix de Creys-Malville dans lequel le bloc pile est fermé à sa partie supérieure par une dalle de béton qui s'appuie directement sur le bâtiment du réacteur. Dans des réalisations de ce genre, la cuve du réacteur et les composants du bloc pile sont suspendus à ladite dalle et s'étendent dans un puits de la structure du bâtiment.

Dans la réalisation actuelle de la centrale Superphénix de Creys-Malville, le bâtiment du réacteur repose par son radier directement sur le sol et se trouve soumis de ce fait à toutes les composantes horizontales et verticales de ce dernier en cas de séisme. Pour améliorer cette technique, on a déjà proposé (Brevet français FR-A-2 316 412 d'EDF-SPIE Batignolles de poser le bâtiment du réacteur sur des appuis en élastomères frettés ayant pour objectif d'atténuer les effets des composantes horizontales des secousses sismiques. Cette technique a déjà été utilisée par EDF pour la centrale nucléaire à eau pressurisée de Cruas ainsi que, en association avec des plaques de glissement, dans la centrale nucléaire à eau pressurisée de Koeberg en Afrique du Sud.

Ces appuis, d'une grande souplesse transversale, agissent, dans le plan horizontal, comme un filtre qui ne laisse passer que la fréquence sur laquelle il est accordé. Les autres fréquences étant éliminées, il n'y a plus d'amplification des mouvements des parties oscillantes de la construction qui sont alors uniquement soumises à l'accélération donnée par le spectre du sol pour la fréquence d'accord.

L'intérêt de tels appuis à faible raideur horizontale mais à forte raideur verticale est de découpler largement les modes de vibration horizontaux des modes verticaux, si bien que l'ensemble du bâtiment, sous une excitation horizontale, se comporte pratiquement comme un oscillateur à un seul degré de liberté qui donne un mouvement de translation horizontale absorbant à lui seul 98 % de l'énergie et éliminant quasi-totalement les mouvements de balancement. Si toutefois la diminution des sollicitations dues aux composantes horizontales du séisme est spectaculaire, ce dispositif ne permet pas d'atténuer l'influence de la composante verticale.

Généralement, les sollicitations verticales sont moins pénalisantes (elles ne représentent qu'un pourcentage supplémentaire à ajouter à la pesanteur) et il est plus facile de s'en accommoder.

Dans le cas particulier des réacteurs du type à neutrons rapides, pour lesquels le bloc pile est suspendu à la dalle, les techniques précédentes peuvent être dans un certain cas encore insuffisantes car de tels réacteurs sont très sensibles aux sollicitations verticales.

La présente invention a précisément pour objet une structure de supportage antisismique qui permet de s'affranchir plus complètement que l'art antérieur précédemment rappelé de l'effet nuisible des composantes horizontales et verticales des ondes sismiques.

Dans le cas particulier d'un bloc pile de réacteur nucléaire du type à neutrons rapides, cette structure de supportage antisismique comprenant une dalle de couverture en béton reposant sur la structure du bâtiment réacteur, dalle à laquelle la cuve et les composants du bloc pile sont suspendus dans un puits de ladite structure, ledit bâtiment reposant sur le sol par deux radiers superposés l'un supérieur et l'autre inférieur, et les deux radiers étant séparés l'un et l'autre par des appuis élastiques, notamment en élastomère fretté, est caractérisée en ce que l'ensemble du bloc pile repose sur la structure par une série d'appuis élastiques amortisseurs des composantes verticales d'ondes sismiques éventuelles et en ce qu'elle est guidée verticalement dans le puits du bâtiment par des moyens de guidage verticaux empêchant tout déplacement horizontal ou balancement de ce bloc par rapport au bâtiment sous l'effet des composantes horizontales de ces mêmes ondes sismiques.

Ainsi donc, comme il est difficile d'envisager des appuis qui puissent à la fois filtrer les composantes horizontales et la composante verticale du séisme sans risque d'avoir un balancement important du bâtiment, la structure, objet de l'invention, permet de minimiser les sollicitations horizontales pour l'ensemble du bâtiment et des matériels qu'il contient et de réduire les sollicitations verticales seulement pour le bloc pile et ses composants (pompes, échangeurs) qui sont les points les plus sensibles.

Comme on le voit, la structure objet de l'invention associe trois moyens en combinaison pour lutter contre les effets nuisibles des chocs sismiques.

Le premier de ces moyens consiste à placer le bâtiment du réacteur sur des appuis élastiques, élastoplastiques ou élastiques associés à des moyens de glissement pour obtenir le cas échéant un mouvement de translation oscillatoire de l'ensemble du bâtiment dans le plan horizontal, sans balancement correspondant qui pourrait être de nature à imprimer au bloc pile des mouvements pendulaires très dangereux. Ces appuis élastiques ont pour but de filtrer, vis-à-vis de la cuve, les composantes horizontales d'un séisme. Ils sont éventuellement complétés d'amortisseur du type visqueux. Dans une réalisation particulière de la présente invention, le bâtiment du réacteur repose sur le sol par deux radiers superposés séparés l'un de l'autre par de tels appuis élastiques, par exemple en élastomère fretté.

Le second moyen utilisé dans la structure objet de l'invention consiste en une série d'appuis élastiques amortisseurs des composantes verticales d'ondes sismiques, appuis élastiques qui sont interposés entre l'ensemble du bloc pile et la structure du bâtiment. Cette série d'appuis élastiques supporte donc les composants du bloc pile et ils sont complétés éventuellement d'amortisseurs du type visqueux destinés à filtrer les effets d'un séisme dans le sens vertical.

Enfin, le troisième moyen de protection réside dans des moyens de guidage verticaux, tels que par exemple des plaques en élastomère fretté qui sont situées entre le bloc pile et la paroi du bâtiment et qui servent de guides verticaux pour empêcher tout déplacement dynamique horizontal ainsi que tout balancement du bloc pile par rapport au reste du bâtiment, obligeant ainsi ce bloc pile à suivre, dans le plan horizontal, le mouvement du bâtiment.

Dans un premier mode de mise en œuvre de la structure de supportage selon l'invention, la série d'appuis élastiques est située entre le radier supérieur et le fond de la structure cylindrique en béton du bloc pile, alors que les moyens de guidage sont répartis le long du puits du bâtiment entre le sommet et le fond de celui-ci.

Dans un deuxième mode de mise en œuvre de la structure, de supportage objet de l'invention, les appuis élastiques et les moyens de guidage sont situés au niveau de la dalle de couverture elle-même, entre celui-ci et la partie supérieure du puits du bâtiment.

De plus, ce système de guidage permet la libre dilatation thermique de la dalle, ce qui, accessoirement, mais de façon très importante, permet de résoudre d'une manière particulièrement simple les problèmes de conception de cette dalle, qu'elle soit encastrée ou suspendue.

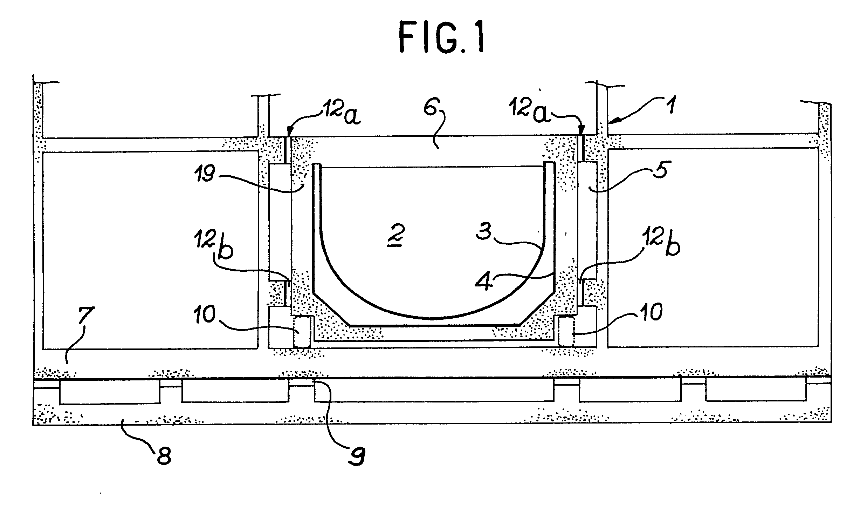

De toute façon, l'invention sera mieux comprise en se référant à la lecture qui suit de divers exemples de mise en œuvre de la structure de supportage antisismique, description qui sera donnée à titre illustratif et non limitatif et qui sera faite en se référant aux figures 1 à 7 ci-jointes sur lesquelles :

la figure 1 est une vue en coupe en élévation d'un bâtiment de réacteur nucléaire du type à neutrons rapides équipé de la structure objet de l'invention, dans son premier mode de mise en œuvre ;

la figure 2 est une vue en coupe en élévation d'un bâtiment de réacteur nucléaire du type à neutrons rapides équipé de la structure objet de l'invention, dans son deuxième mode de mise en œuvre ;

la figure 3 est une vue de dessus de la dalle du réacteur de la figure 2 ;

la figure 4 est une vue agrandie en coupe en élévation selon XX de la figure 5 du détail A de l'extrémité supérieure de la dalle du réacteur de la figure 2 ;

la figure 5 est une vue de dessus en coupe selon YY de la figure 4 ;

la figure 6 est une vue en coupe d'un amortisseur viscoélastique des composantes verticales d'ondes sismiques ;

la figure 7 illustre un exemple de mise en œuvre de l'invention à la protection d'un bloc massif utilisé dans la construction immobilière.

Sur la figure 1, on a représenté le bâtiment 1 d'une centrale nucléaire du type à neutrons rapides dont le bloc pile 2 comporte une cuve principale 3 et une cuve de sécurité 4 dans un puits 5 du bâtiment 1 ; le bloc pile 2 et la cuve 3 du réacteur sont fermés de façon classique par une dalle de béton 6. A la partie inférieure du bâtiment 1 se trouvent situés deux radiers, à savoir un radier supérieur 7 et un radier inférieur 8 séparés l'un de l'autre par des appuis élastiques 9 en élastomère fretté. Ces appuis 9 permettent un déplacement horizontal oscillatoire avec un retour à la position initiale de la partie supérieure du bâtiment 1 par rapport au radier inférieur 8, ce qui peut être très utile pour l'absorption de chocs sismiques pourvus de composantes horizontales d'une certaine ampleur.

Le bloc pile 2 repose sur le bâtiment 1 de la façon suivante. Une structure cylindrique latérale 19 en béton faisant corps avec et prolongeant sur les extrémités périphériques la dalle du réacteur 6, sert d'appui au bloc pile 2 par l'intermédiaire de la série d'appuis élastiques 10 interposés entre le fond de cette structure cylindrique 19 et le radier supérieur 7. Dans ce premier mode de mise en œuvre, les moyens de guidage verticaux 12 sont répartis latéralement entre les appuis 12a à la partie supérieure et les appuis 12b à la partie inférieure du bloc pile 2. Les moyens de guidage 12 sont rigides dans le plan horizontal et souples dans le plan vertical. La répartition du guidage vertical du bloc réacteur dans le puits 5 entre le haut et le bas du puits permet d'éviter complètement tout balancement ou toute oscillation (ou « rocking » en terminologie anglosaxonne) de l'ensemble du bloc réacteur en cas de secousses sismiques.

Le fonctionnement de la structure décrite est le suivant :

le mouvement horizontal de l'ensemble est imposé par les appuis parasismiques 9 placés sous le bâtiment 1 ;

le mouvement vertical du bloc-réacteur 2 est réglé par les caractéristiques des appuis élastiques et amortisseurs 10 ;

le mouvement vertical d'ensemble du reste du bâtiment 1 est fonction de ses fréquences propres qui dépendent des caractéristiques du sol.

Le bâtiment du réacteur 1 et le bloc-réacteur 2 sont reliés par des tuyauteries, des câbles, etc non représentés, qui doivent avoir assez de souplesse pour accepter les mouvements différentiels verticaux qui se produiront, en cas de séisme, entre ces deux parties.

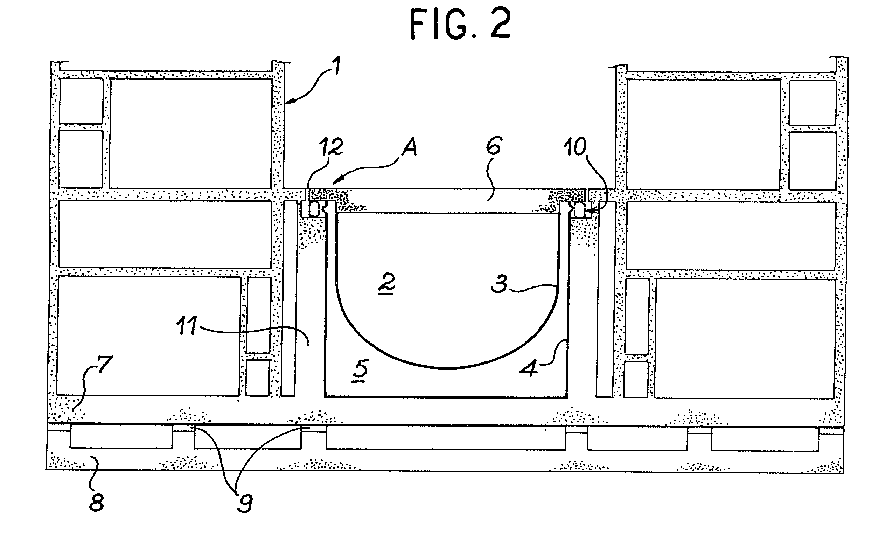

Sur la figure 2, on a représenté le deuxième mode de mise en œuvre de la structure de supportage objet de l'invention, dans laquelle on retrouve, portant les mêmes nombres de référence, la plupart des éléments du mode de mise en œuvre de la figure 1. Dans cette réalisation toutefois, les appuis élastiques 10 et les moyens de guidage 12 sont situés au niveau de la dalle de couverture 6 de la façon suivante.

Selon l'invention, les appuis élastiques amortisseurs 10 sont placés entre les extrémités supérieures de la dalle 6 et le caisson de béton vertical 11 entourant directement le bloc pile 2 ; ces moyens amortisseurs permettent d'absorber les composantes verticales d'une onde sismique éventuelle en évitant le basculement de la cuve 3 du réacteur par rapport au bâtiment 1.

Les moyens de guidage élastiques verticaux 12, située verticalement entre les extrémités périphériques de la dalle 6 du réacteur et les structures du bâtiment 1 permettent le guidage du bloc pile 2 dans le puits 5 dans le sens vertical en empêchant tout déplacement horizontal du bloc pile 2 et tout balancement de celui-ci sous l'effet des composantes horizontales d'une onde sismique éventuelle, puisqu'il est alors pratiquement solidaire du bâtiment 1.

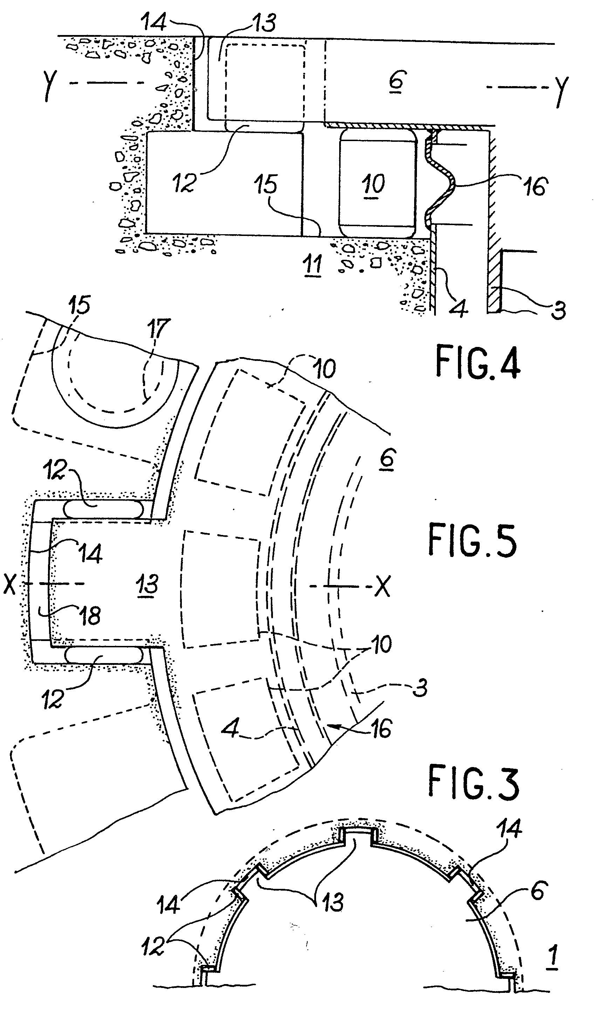

Sur la figure 3, on voit la vue de dessus de la dalle du réacteur 6 munie sur son pourtour d'un certain nombre de tenons d'appuis tels que 13 qui coopèrent avec des mortaises 14 découpées dans le béton du bâtiment du réacteur 1 de façon à enserrer latéralement les moyens de guidage élastiques verticaux 12 empêchant toute rotation horizontale de la dalle 6 par rapport au bâtiment 1 sous l'effet de la composante horizontale d'une onde sismique.

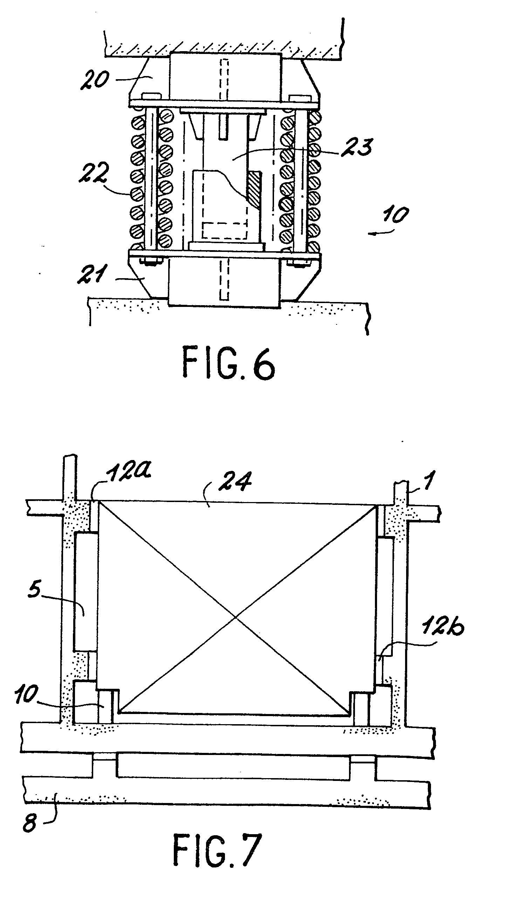

Le détail de réalisation du secteur repéré A sur la figure 2 est montré sur les figures 4 et 5 où l'on retrouve les principaux composants déjà mentionnés, avec, en plus, la galerie circulaire 15 située sous la dalle 6 et servant notamment d'accès aux premiers appuis élastiques 10 ainsi qu'aux joints étanches et souples 16 qui permettent d'éviter toute fuite de matériaux radioactifs en provenance de la cuve principale 3 vers l'extérieur de celle-ci. Des puits d'hommes 17 répartis sur la périphérie de l'installation permettent l'introduction des individus nécessaire aux différentes manipulations et entretiens dans cette galerie 15. Sur la figure 4, on voit également en 10 les appuis élastiques amortisseurs de composantes verticales et les moyens de guidage élastiques 12 situés verticalement entre les tenons 13 et les mortaises 14 appartenant respectivement à la dalle 6 et au béton du bâtiment 1 du réacteur. Les moyens de guidage 12 sont rigides dans la direction horizontale (pour permettre l'entraînement de la dalle 6 par le bâtiment 1) et souples dans leurs plans parallèles verticaux (pour permettre la liberté du mouvement vertical de la cuve 3). Entre le tenon 13 et la mortaise 14, se situe un vide qui constitue un joint de dilatation 18 permettant, lorsque le réacteur monte en température, l'expansion radiale de la dalle. Cette disposition qui est une conséquence de l'existence des tenons 13 et mortaises 14 est très intéressante car elle résout de façon simple le problème resté délicat jusqu'à ce jour de la dilatation radiale de la cuve et de la dalle qui la supporte.

On conçoit ainsi qu'à l'aide de l'association des trois moyens que constituent les appuis 9, 10 et 12, on obtienne une protection maximale et efficace contre les ondes sismiques d'une certaine importance, que leurs composantes soient à majorité horizontale ou verticale.

La structure de supportage anti-sismique objet de l'invention réalise ainsi un double filtrage horizontal et vertical des sollicitations sismiques qui diminue considérablement les accélérations auxquelles la dalle et les composants du bloc pile sont soumis en cas de séisme. Il permet donc une construction simplifiée et beaucoup moins coûteuse que les constructions actuelles.

De plus, cette structure permet de façon très simple une modélisation du système oscillant à trois degrés de liberté (2 horizontaux et 1 vertical dont les caractéristiques de raideur et d'amortissement sont connues avec précision. Il en résulte par conséquent une très bonne connaissance de la réponse dynamique en cas de choc, ce qui est également très satisfaisant du point de vue de la sûreté du réacteur.

Sur la figure 6, on a représenté un amortisseur 10 de la figure 1 plus en détail. Cet amortisseur 10 est du type viscoélastique et comporte entre ses extrémités 20 et 21 une série de ressorts 22 et un amortisseur 23 du type visqueux. Cette association permet d'augmenter les qualités du filtrage de la composante verticale d'un choc sismique au-dessus d'une fréquence de l'ordre de 1 à 1,7 Hz.

Sur la figure 7, on a représenté schématiquement l'application de l'invention à la protection sismique d'un bloc 24 massif, tel qu'il en existe dans les constructions immobilières. Ce bloc grâce aux moyens de l'invention qui portent les mêmes références que sur la figure 1, est stabilisé et prémuni contre les balancements ou oscillations par double filtrage des composantes horizontales et verticales au-dessus de 1 Hz environ.

**Revendications**

1. Structure de supportage antisismique pour bloc massif, notamment pour bloc pile (2) de réacteur nucléaire du type à neutrons rapides comprenant une dalle (6) en béton reposant sur un bâtiment (1), dalle (6) à laquelle la cuve (3) et les composants du bloc pile sont suspendus dans un puits (5) dudit bâtiment, ce dernier reposant sur le sol par deux radiers superposés (7, 8), l'un supérieur et l'autre inférieur, et les deux radiers étant séparés l'un de l'autre par des appuis élastiques (9) notamment en élastomère fretté autorisant un déplacement oscillatoire horizontal de l'un par rapport à l'autre dans le but de filtrer vis-à-vis de la cuve les composantes horizontales du séisme, caractérisée en ce que le bloc massif (2) repose sur le bâtiment (1) par une série d'appuis élastiques amortisseurs (10) des composantes verticales d'ondes sismiques éventuelles et qu'il est guidé verticalement dans le puits du bâtiment (5) par des moyens de guidage verticaux (12) empêchant tout déplacement horizontal et balancement de ce bloc par rapport au bâtiment (1), sous l'effet des composantes horizontales de ces mêmes ondes sismiques.

2. Structure de supportage selon la revendication 1, caractérisée en ce que la série d'appuis élastiques (10) est située entre le radier supérieur (7) et le fond de la structure cylindrique en béton (19) du bloc massif (2) et en ce que les moyens de guidage (12) sont répartis entre le sommet et le fond du puits du bâtiment.

3. Structure de supportage selon la revendication 1, caractérisée en ce que les appuis élastiques (10) et les moyens de guidage (12) sont situés au niveau de la dalle (6) elle-même, entre celle-ci et la partie supérieure du puits (5) du bâtiment.

4. Structure de supportage selon la revendication 3, caractérisée en ce que des moyens de guidage (12) sont, en outre, situés entre des tenons (13) et des mortaises (14) appartenant respectivement à la dalle (6) et au bâtiment (1).

5. Structure de supportage selon la revendication 1, caractérisée en ce que les appuis élastiques amortisseurs (9, 10) sont complétés par des moyens d'amortissement visqueux (23).

**Claims**

1. Antiseismic support structure for massive objects, especially for the pile block (2) of a fast neutron reactor comprising a concrete slab (6) resting on a housing (1), the reactor vessel (3) and the components of the pile block being suspended from the slab (6) in a pit (5) of said housing, the latter resting on the ground by means of two superimposed grids (7, 8), one upper and one lower, and the two grids being separated from one another by elastic bearings (9) especially of elastomeric bundles permitting oscillatory horizontal displacement (of the grids) with respect to one another whereby to filter out the horizontal components of the seism, with respect to the reactor vessel, characterized in that the massive block (2) rests on the housing (1) through a series of elastic bearings (10) absorbing vertical components of any seismic waves, and in that it is vertically guided in the pit (5) of the housing by vertical guide means (12) preventing all horizontal displacement, and swaying of the block with respect to the housing (1) under the effect of horizontal components of the same seismic waves.

2. Support structure according to Claim 1, characterized in that the series of elastic bearings (10) is located between the upper grid (7) and the bottom of the cylindrical concrete structure (19) of the massive block (2), and in that the guide means (12) are distributed between the top and bottom of the housing pit.

3. Support structure according to Claim 1, characterized in that the elastic bearings (10) and the guide means (12) are located at the level of the slab (6) itself, between the latter and the upper part of the housing pit (5).

4. Support structure according to Claim 3, characterized in that the guide means (12) are additionally located between tenons (13) and mortices (14) respectively associated with the slab (6) and the housing (1).

5. Support structure according to Claim 1, characterized in that the shock absorbing elastic bearings (9, 10) are supplemented by viscous absorbing means (23).

**Patentansprüche**

1. Erdbebensichere Stützstruktur für einen massiven Block, insbesondere den Brennstoffblock (2) eines schnellen Reaktors, mit einer auf einem Bauwerk (1) ruhenden Platte (6) aus Beton, an welcher Platte (6) der Behälter (3) und die Elemente des Brennstoffblockes in einer Vertiefung (5) des Bauwerkes hängend befestigt sind, welches auf dem Boden mittels zweier einander überlagerter Fundamente (7, 8), einem oberen und einem unteren, ruht, wobei die zwei Fundamente voneinander durch elastische Stützen (9) getrennt sind, insbesondere aus bandagiertem Elastomer, die eine horizontale Schwingungsverschiebung des einen in Bezug auf das andere mit dem Zweck erlauben, relativ zu dem Behälter die horizontalen Komponenten des Erdbebens auszufiltern, dadurch gekennzeichnet, daß der massive Block (2) auf dem Bauwerk (1) mittels einer Reihe elastischer Stützen ruht, die Dämpfer (10) der gegebenenfalls vertikalen Komponenten von Erdbebenwellen sind, und in der Vertiefung des Bauwerkes (5) mittels vertikaler Führungseinrichtungen (12) vertikal geführt ist, die jegliches horizontales Verschieben und Schaukeln dieses Blockes in Bezug auf das Bauwerk (1) unter der Wirkung der Horizontalkomponenten dieser gleichen Erdbebenwellen verhindern.

2. Stützstruktur nach Anspruch 1, dadurch gekennzeichnet, daß sich die Reihen von elastischen Stützen (10) zwischen dem oberen Fundament (7) und dem Boden der zylindrischen Struktur (19) aus Beton des massiven Blockes (2) befinden und daß die Führungseinrichtungen (12) zwischen dem obersten Abschnitt und dem Boden der Vertiefung des Bauwerkes verteilt sind.

3. Stützstruktur nach Anspruch 1, dadurch gekennzeichnet, daß sich die elastischen Stützen und die Führungseinrichtungen (12) auf der Höhe

**0 101 378**

der Platte (6) selbst zwischen dieser und dem oberen Abschnitt der Vertiefung (5) des Bauwerkes befinden.

4. Stützstruktur nach Anspruch 3, dadurch gekennzeichnet, daß sich die Führungseinrichtungen (12) zwischen Vorsprüngen (13) und Einschnitten (14) befinden, die zu der Platte (6) bzw. dem Bauwerk (1) gehören.

5. Stützstruktur nach Anspruch 1, dadurch gekennzeichnet, daß die elastischen Dämpfungsstützen (9, 10) durch Viskosedämpfungsmittel (23) vervollständigt sind.

# FIG.1

0 101 378

## FIG. 2

0 101 378

FIG.4

FIG.5

FIG.3

FIG.6

FIG.7